# EUROPÄISCHE PATENTSCHRIFT

(11) **EP 1 846 265 B1**
(45) Veröffentlichungstag und Bekanntmachung des Hinweises auf die Patenterteilung: **30.08.2017**
(21) Anmeldenummer: 06706191.1
(22) Anmeldetag: 11.01.2006
(51) Int. Cl.: B60Q 1/14

(54) **VERFAHREN ZUR BETÄTIGUNG VON SCHEINWERFERN EINES KRAFTFAHRZEUGS**
METHOD FOR ACTUATING HEADLIGHTS OF A MOTOR VEHICLE
PROCEDE DE COMMANDE DES PHARES D'UN VEHICULE

(30) Priorität: 11.02.2005 DE 102005006288
(43) Veröffentlichungstag der Anmeldung: 24.10.2007
(73) Patentinhaber: Bayerische Motoren Werke Aktiengesellschaft, 80809 München (DE)
(72) Erfinder: BROD, Ralf, New York 10019 New York (US)
(74) Vertreter: Mayer-Martin, Christian
(86) Internationale Anmeldenummer: PCT/EP2006/000155
(87) Internationale Veröffentlichungsnummer: WO 2006/084536

(56) Entgegenhaltungen:
- US-A- 2 890 386
- US-A- 4 236 099
- US-A1- 2003 123 706

## Beschreibung

Die Erfindung betrifft ein Verfahren zur Betätigung von Scheinwerfern eines Kraftfahrzeuges mit einem manuellen Modus, in dem die Scheinwerfer mittels manueller Betätigung eines Wahlhebels in eine erste Betätigungsrichtung in einen ersten Leuchtzustand und mittels Betätigung des Wahlhebels in eine zweite Betätigungsrichtung in einen zweiten Leuchtzustand überführbar sind, und einem automatischen Modus, in dem eine externe Beleuchtungssituation mittels Sensoren erfasst und durch Auswertemittel ausgewertet wird, so dass die Scheinwerfer gemäß einem Ergebnis der Auswertung automatisch in den ersten oder in den zweiten Leuchtzustand versetzt werden, wobei im automatischen Modus eine Übersteuerungsmöglichkeit vorgesehen ist, so dass die Scheinwerfer durch manuelle Betätigung des Wahlhebels in die erste oder in die zweite Betätigungsrichtung unabhängig von dem Ergebnis der Auswertung in den jeweils entsprechenden Leuchtzustand überführbar sind.

Ein solches Verfahren ist bekannt aus DE 101 56 653 A1. Verfahren zur automatischen Steuerung der Scheinwerfer eines Kraftfahrzeugs dienen allgemein der Reduzierung der Beeinträchtigung anderer Verkehrsteilnehmer durch die Blendwirkung der eigenen Scheinwerfer bei gleichzeitiger Entlastung des Fahrers. Dabei wird durch spezielle Sensoren eine externe Beleuchtungssituation erfasst und in einem Steuergerät oder einer zentralen Datenverarbeitungseinrichtung analysiert. Zur Erfassung der externen Beleuchtungssituation und speziellen Analyse sind verschiedene Ansätze bekannt. In der DE 298 25 026 U1 beispielsweise wird ein bildgebender, farbsensitiver Sensor verwendet, dessen Ausgabebilder bzgl. Helligkeit, geometrischer Lichtquellenanordnung und Lichtquellenfarbe analysiert werden. Aus dem Analyseergebnis wird auf die tatsächlichen Eigenschaften erkannter Lichtquellen geschlossen und insbesondere ermittelt, ob Fahrer entgegenkommender oder vorausfahrender Fahrzeuge möglicherweise durch das eigene Fernlicht geblendet werden könnten. Ist dies der Fall, erfolgt eine automatische Umschaltung auf Abblendlicht. Wird die externe Beleuchtungssituation hingegen dahingehend ausgewertet, dass keine Blendgefahr für andere Verkehrsteilnehmer besteht, werden die eigenen Scheinwerfer auf Fernlicht umgeschaltet, um die eigene Fernsicht zu optimieren. Bei dem in der oben genannten, DE 101 56 653 A1 offenbarten Verfahren wird dem Umstand Rechnung getragen, dass der Fahrer eines Kraftfahrzeugs sich nicht in jeder Situation der automatischen Scheinwerfersteuerung unterwerfen möchte, sondern situationsabhängig die automatische Einstellung übersteuern können möchte. Um dem Fahrer die Übersteuerung besonders bequem zu gestalten, ist dabei vorgesehen, denselben Wahlhebel in derselben Weise zu betätigen, wie es der Fahrer aus dem manuellen Modus gewohnt ist. Dies bedeutet, dass bei automatisch eingeschaltetem Fernlicht eine Betätigung des Wahlhebels in Richtung "Abblendlicht" zu einer manuellen Umschaltung auf Abblendlicht führt, wohingegen bei automatisch eingeschaltetem Abblendlicht eine Betätigung des Wahlhebels in Richtung "Fernlicht" zu einer manuellen Umschaltung auf Fernlicht führt.

US 2003&0123706 A1 offenbart ein gattungsgemäßes Verfahren zur Betätigung von Scheinwerfern eines Kraftfahrzeuges mit einem manuellen Modus, in dem die Scheinwerfer mittels manueller Betätigung eines Lenkstockschalters in einen ersten und in einen zweiten Leuchtzustand überführbar sind, und einem automatischen Modus, in dem eine externe Beleuchtungssituation mittels Sensoren erfasst und durch Auswertemittel ausgewertet wird, so dass die Scheinwerfer gemäß einem Ergebnis der Auswertung automatisch in den ersten oder in den zweiten Leuchtzustand versetzt werden, wobei im automatischen Modus eine Übersteuerungsmöglichkeit vorgesehen ist, so dass die Scheinwerfer durch manuelle Betätigung des Lenkstockschalters unabhängig von dem Ergebnis der Auswertung in den jeweils entsprechenden Leuchtzustand überführbar sind, wobei ein spezieller Übersteuerungsmodus vorgesehen ist, der durch manuelle Betätigung des Lenkstockschalters im automatischen Modus eingeschaltet wird, wobei im Fall, dass sich die Scheinwerfer im ersten Leuchtzustand befinden, eine Betätigung des Lenkstockschalters eine zeitlich begrenzte Umschaltung zwischen dem automatischen Modus und dem Übersteuerungsmodus verursacht, wobei die Scheinwerfer im Fall, dass sie sich im Übersteuerungsmodus im ersten Leuchtzustand befinden, durch eine Betätigung des Lenkstockschalters unter Beibehaltung des Übersteuerungsmodus in den zweiten Leuchtzustand überführbar sind, wobei im Fall, dass sich die Scheinwerfer im Übersteuerungsmodus im zweiten Leuchtzustand befinden, Betätigung des Lenkstockschalters eine Überführung der Scheinwerfern in den ersten Leuchtzustand unter Beibehaltung des Übersteuerungsmodus verursacht, und wobei erste Leuchtzustand der Scheinwerfer deren Fernlichteinstellung und der zweite Leuchtzustand der Scheinwerfer deren Abblendlichteinstellung entspricht.

Von anderen Assistenzsystemen, wie beispielsweise einer automatischen Geschwindigkeitssteuerung, ist es weiter bekannt, dass die Übersteuerung der Automatik zur Abschaltung des automatischen Modus und zum Übergang in den üblichen, manuellen Modus führt. Zur Rückkehr in den automatischen Modus ist die Betätigung eines zusätzlichen Betätigungselementes erforderlich. Dies erfordert zusätzliche Bauelemente, was mit erhöhten Kosten verbunden ist, und verlangt vom Fahrer das Erlernen spezieller Handhabungsschritte, die von einem Kraftfahrzeugtyp zum anderen verschieden sein können.
Aufgabe der vorliegenden Erfindung ist es, ein gattungsgemäßes Verfahren derart weiterzubilden, dass der Fahrer durch suggestive Betätigung gewohnter Schaltelemente stets den der Situation angemessenen, optimalen Beleuchtungszustand seines Kraftfahrzeuges erreichen kann.

Diese Aufgabe wird in Verbindung mit den Merkmalen von Anspruch 1 gelöst. Im Gegensatz zum Stand der Technik führt ein manuelles Übersteuern der Beleuchtungsautomatik nicht unmittelbar zurück in den manuellen Modus. Vielmehr wird beim Übersteuern der Automatikfunktion das System in einen speziellen Übersteuerungsmodus überführt, der sich, obgleich in ihm keine Automatikgesteuerten Umschaltungen vorgenommen werden, in seinen Eigenschaften vom rein manuellen Modus unterscheidet. Erfindungsgemäß ist weiter vorgesehen, dass in einem Leuchtzustand der Scheinwerfer eine Betätigung des Wahlhebels in der Weise, die üblicherweise zur Einschaltung des bereits vorliegenden Leuchtzustandes dient, eine Umschaltung zwischen automatischem Modus und Übersteuerungsmodus verursacht. Diese Umschaltung ist von beiden Moden her erreichbar, sofern sich die Scheinwerfer in dem ersten Beleuchtungszustand, der vorzugsweise der Fernlicht-Zustand ist, befinden. Konkret bedeutet dies bei Ausführungsform, dass im Fall, dass das Fernlicht eingeschaltet ist, eine erneute Betätigung des Wahlhebels in Richtung "Fernlicht" zur Umschaltung zwischen automatischem und Übersteuerungsmodus führt. Am Leuchtzustand der Scheinwerfer ändert sich dabei nichts. Es ist vorgesehen, dass die Scheinwerfer im Fall, dass sie sich im Übersteuerungsmodus im ersten Leuchtzustand befinden, durch die Betätigung des Wahlhebels in die zweite Betätigungsrichtung unter Beibehaltung des Übersteuerungsmodus in den zweiten Leuchtzustand überführbar sind. Insoweit funktioniert der Übersteuerungsmodus wie der manuelle Modus. Wenn, wie vorgesehen, der erste Leuchtzustand dem Fernlicht und der zweite Leuchtzustand dem Abblendlicht entspricht, bedeutet dies, dass bei eingeschaltetem Fernlicht eine Betätigung des Wahlhebels in Richtung "Abblendlicht" im Übersteuerungsmodus zum Abblenden bei gleichzeitigem Beibehalten des Übersteuerungsmodus führt. In Kombination mit der bekannten Übersteuerungsmöglichkeit bedeutet dies für den Fahrer, dass er in jedem Fall, unabhängig davon, ob sich das System im manuellen, automatischen oder Übersteuerungsmodus befindet, bei Fernlicht durch Betätigung des Wahlhebels in Richtung "Abblendlicht" abblenden kann. Eine Kenntnis des aktuellen Modus ist nicht erforderlicht.

Diese Parallelität mit dem manuellen Modus besteht für die umgekehrte Schaltrichtung jedoch nicht uneingeschränkt. Es ist vorgesehen, dass im Fall, dass sich die Scheinwerfer im Übersteuerungsmodus im zweiten Leuchtzustand befinden, Betätigung des Wahlhebels in die erste Betätigungsrichtung eine Umschaltung in den automatischen Modus verursacht, falls dieser betriebsbereit ist. Ausgedrückt am Ausführungsform, bei der der erste Leuchtzustand dem Fernlicht und der zweite Leuchtzustand dem Abblendlicht entspricht, bedeutet dies, dass bei Abblendlicht im Übersteuerungsmodus eine Betätigung des Wahlhebels in Richtung "Fernlicht" einen Modenwechsel zum automatischen Modus verursacht. Wird dann nach Analyse der externen Beleuchtungssituation festgestellt, dass eine Umschaltung auf Fernlicht nach den im automatischen Modus vorgegebenen Auswerteregeln tatsächlich angemessen ist, erfolgt die Umschaltung auf Fernlicht als automatischer Vorgang. Sie unterbleibt, wenn die Automatik eine Umschaltung auf Fernlicht für unangemessen hält. Will der Fahrer jedoch gegen die Einschätzung der Automatik aufblenden, kann er dies durch erneute Betätigung des Wahlhebels in Richtung Fernlicht tun, was dann zu einer Umschaltung von automatischem Abblendlicht zu Fernlicht im Übersteuerungsmodus führt. Diese Ausführungsform ist besonders vorteilhaft, da die Erfahrung lehrt, dass ein manuelles Umschalten von Abblendlicht auf Fernlicht nur dann erfolgt, wenn keine anderen, blendgefährdeten Verkehrsteilnehmer in der Nähe sind. In dieser Situation ist es jedoch angemessen, nicht nur aufzublenden, sondern gleichzeitig auch der Automatik wieder die Steuerung der Scheinwerfer zu überlassen.

Dabei ist weiter vorgesehen, dass im Fall, dass der automatische Modus nicht betriebsbereit ist, Betätigung des Wahlhebels in die erste Betätigungsrichtung eine Überführung der Scheinwerfer in den ersten Leuchtzustand unter Beibehaltung des Übersteuerungsmodus verursacht. Unter Bezugnahme auf das zuvor erläuterte Beispiel bedeutet dies, dass, falls die Automatik nicht betriebsbereit ist, das Fernlicht wie im manuellen Modus direkt eingeschaltet wird.
Da nicht jeder Fahrer die Vorzüge einer automatischen Scheinwerfersteuerung zu schätzen weiß, ist vorteilhafter Weise vorgesehen, dass mittels eines Schalters zwischen dem manuellen Modus einerseits und dem automatischen und Übersteuerungsmodus andererseits gewählt werden kann. Dieser Schalter ist vorzugsweise der bei Kraftfahrzeugen üblicherweise vorgesehene Beleuchtungshauptschalter, der um eine weitere Stellung "Automatik" erweitert werden kann. Der Fahrer kann damit jederzeit in einen rein manuellen Modus umschalten und den Wahlhebel in gewohnter Weise zur Steuerung der Scheinwerfer betätigen.

Vorzugsweise wird der manuelle Modus nach Ausschalten der Zündung des Kraftfahrzeugs selbsttätig eingestellt. Nimmt ein Fahrzeug nämlich nicht am rollenden Verkehr teil, ist eine dynamische Anpassung der Scheinwerfersteuerung, wie durch den automatischen bzw. Übersteuerungsmodus vorgesehen, nicht erforderlich.

Wie oben erläutert, ist bei günstigen Ausführungsformen der Erfindung eine explizite Kenntnis des aktuellen Modus durch den Fahrer nicht erforderlich. Gleichwohl ist vorzugsweise eine Kontrollleuchte vorgesehen, die den Fahrer darauf hinweist, dass der automatische Modus eingeschaltet ist. Insbesondere bei mit derartigen Systemen nicht vertrauten Fahrern kann ansonsten die automatische Umschaltung überraschend und daher als unangenehm wahrgenommen werden.

Schließlich verursacht im Fall, dass sich die Scheinwerfer im zweiten Leuchtzustand befinden, eine Betätigung des Wahlhebels in die erste Betätigungsrichtung ein Aufblenden der Scheinwerfer für die Dauer der Betätigung. Dies entspricht der üblichen Lichthupenfunktion. Weitere Merkmale und Vorteile der Erfindung ergeben sich aus der nachfolgenden, speziellen Beschreibung und den Zeichnungen.

Es zeigt:

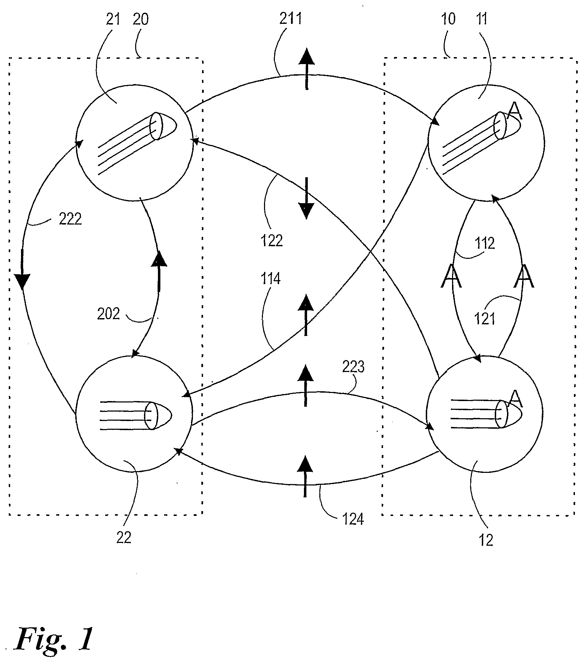

- Figur 1:: eine schematische Übersicht über die Schaltvorgänge gemäß dem erfindungsgemäßen Verfahren.

Figur 1 zeigt schematisch einen Ausschnitt des erfindungsgemäßen Verfahrens. In gestrichelten Blöcken sind der automatische Modus 10 und der Übersteuerungsmodus 20 dargestellt, die jeweils zwei Leuchtzustände der Scheinwerfer umfassen. Im automatischen Modus 10 sind ein Abblendzustand 11 und ein Fernlichtzustand 12 der Scheinwerfer erreichbar. In der Darstellung von Figur 1 sind diese Zustände als Piktogramme mit dem Zusatz "A" erkennbar. Im Übersteuerungsmodus 20 sind ebenfalls ein Abblendzustand 21 und ein Fernlichtzustand 22 der Scheinwerfer einstellbar. Diese sind in Figur 1 ebenfalls als Piktogramme, jedoch ohne "A" dargestellt. Die geschwungenen Pfeillinien in Figur 1 stellen mögliche Übergänge zwischen den Zuständen 11, 12, 21 und 22 dar. Die fettgezeichneten, geraden Pfeile an den geschwungenen Übergangspfeilen stellen symbolisch eine entsprechende Betätigung eines Wahlhebels dar. Als Wahlhebel kommt insbesondere der Licht-Lenkstockhebel, der üblicherweise bei Automobilen für die Ansteuerung der Scheinwerfer vorgesehen ist, in Frage. Bei der dargestellten Ausführungsform bedeutet ein nach oben gerichteter Betätigungspfeil ein "Drücken" des Lenkstockhebels, wohingegen ein nach unten gerichteter Betätigungspfeil ein "Ziehen" des Lenkstockhebels bezeichnet. Selbstverständlich sind auch andere Ausführungsformen denkbar. Bei denen beispielsweise die Betätigungsrichtungen umgekehrt sind oder bei denen andere Betätigungsrichtungen verwendet werden.

Neben den in Figur 1 dargestellten Moden, nämlich dem automatischen Modus 10 und dem Übersteuerungsmodus 20 ist ein dritter, in Figur 1 nicht dargestellter, rein manueller Modus vorgesehen, der vom Fahrer des Kraftfahrzeugs mittels eines gesonderten Schalters, vorzugsweise des Beleuchtungshauptschalters, einstellbar ist. Dieser manuelle Modus, der in bekannter Weise funktioniert, ist für die vorliegende Erfindung nicht relevant. Nachfolgend soll nur der Fall beschrieben werden, in dem sich das System, vorzugsweise mittels Wahl durch den Fahrer und / oder weiterer Kriterien wie z.B. Anliegen bestimmter Sensorsignale, im Automatik- / Übersteuerungsmodus befindet.

Zum Zwecke der Erläuterung sei angenommen, dass anfänglich der automatische Fernlichtzustand 12 vorliegt. Erfasst die Sensorik eine externe Beleuchtungssituation, beispielsweise ein entgegenkommendes oder vorausfahrendes Fahrzeug, so dass zur Vermeidung einer Blendung anderer Verkehrsteilnehmer ein Abblenden erforderlich ist, schaltet das System automatisch in den automatischen Abblendmodus 11 um (Schaltpfeil 121). Besteht keine Blendungsgefahr mehr, etwa weil das entgegenkommende Auto vorbeigefahren ist oder weil das voranfahrende Auto abgebogen ist oder überholt wurde, schaltet die Beleuchtungsautomatik wieder in den automatischen Fernlichtmodus 12 (Schaltpfeil 112).

Erkennt der Fahrer die Notwendigkeit eines Abblendens, die von der Automatik nicht erfasst wird, etwa einen entgegenkommenden, unbeleuchteten Fußgänger oder im Lichtkegel der Scheinwerfer auftauchendes Wild, kann er durch Ziehen des Lenkstockhebels die Automatik übersteuern und die Scheinwerfer manuell in den Abblendzustand 21 überführen (Schaltpfeil 122). Das System verbleibt nun im Zustand 21, unabhängig von der Bewertung der externen Beleuchtungssituation durch die Automatik.

Solange die vorgenannte Situation anhält, besteht für den Fahrer kein Anlass, den Leuchtzustand der Scheinwerfer zu ändern. Auch wenn sich im unmittelbaren Anschluss neue Situationen, z.B. durch Auftauchen eines entgegenkommenden Fahrzeugs, ergeben, in denen Blendungsgefahr vorliegt, wird der Fahrer Abblendlicht beibehalten wollen, so dass zunächst kein Handlungsbedarf besteht. Erst wenn sich die Situation so geändert hat, dass keine blendungsgefährdeten Verkehrsteilnehmer voraus sind, entsteht beim Fahrer der Wunsch, erneut aufzublenden. Er tut dies intuitiv durch das gewohnte Drücken des Lenkstockhebels. Ist der Automatikmodus in diesem Moment betriebsbereit, erfolgt eine Umschaltung gemäß Schaltpfeil 211, d.h. ein Übergang in den automatischen Abblendzustand 11. Damit überführt der Fahrer das System vom Übersteuerungsmodus 20 zurück in den automatischen Modus 10, ohne dabei explizit den Leuchtzustand zu ändern. Allerdings erfasst die Automatik die vorliegende Situation ohne Blendungsgefahr Dritter sehr schnell, so dass unmittelbar im Anschluss ein automatischer Übergang zum automatischen Fernlichtzustand 12 zu erwarten ist (Schaltpfeil 112). Der Wunsch des Fahrers nach Einschalten des Fernlichts ist damit erfüllt; gleichzeitig wurde in den automatischen Modus 10 zurückgekehrt.

Stimmt nach Drücken des Lenkstockhebels die Analyse der externen Beleuchtungssituation durch die Automatik jedoch nicht mit der Situationseinschätzung durch den Fahrer überein, d.h. sieht die Automatik im Gegensatz zum Fahrer eine Blendungsgefahr Dritter als gegeben an, verbleibt sie im automatischen Abblendzustand 11. Will der Fahrer jedoch seinen Wunsch nach Einschaltung des Fernlichtes durchsetzen, kann er dies durch erneutes Drücken des Lenkstockhebels erreichen (Schaltpfeil 114). Dies entspricht einer manuellen Übersteuerung der Automatik und führt zum Fernlichtzustand 22.

Durch erneutes Drücken des Lenkstockhebels kann der Fahrer nun zurück zum automatischen Modus 10 schalten (Schaltpfeil 223). Wird der Fernlichtzustand von der Automatik als angemessen erachtet, erfolgt keine Änderung des Leuchtzustandes der Scheinwerfer. In diesem Fall kann der Fahrer durch erneutes Drücken des Lenkstockhebels beliebig zwischen automatischem Modus 10 und Übersteuerungsmodus 20 hin und her schalten (Schaltpfeil 223, 124). Erachtet die Automatik bei einem Übergang gemäß Schaltpfeil 223 jedoch den Abblendzustand als angemessen, wird nach Übergang in den automatischen Fernlichtzustand 12 automatisch gemäß Schaltpfeil 121 abgeblendet. Das System ist vorzugsweise so ausgelegt, dass eine explizite Kenntnis des Fahrers über den aktuellen Modus nicht erforderlicht ist; günstigerweise wird ihm jedoch der jeweils aktuell anliegende Modus durch eine geeignete Kontrollleuchte angezeigt.

Befindet sich das System bei eingeschaltetem Fernlicht im Übersteuerungsmodus, d.h. im Zustand 22, führen evtl. parallel durchgeführte Auswertungen der externen Beleuchtungssituation durch die Automatik zu keiner Änderung des Leuchtzustandes der Scheinwerfer. Erkennt der Fahrer jedoch die Notwendigkeit eines Abblendens, kann er dies auf herkömmliche Weise durch Ziehen des Lenkstockhebels veranlassen (Schaltpfeil 222).

Schließlich ist in Figur 1 noch ein weiterer Schaltpfeil 202 zum Übergang vom Abblendzustand 21 zum Fernlichtzustand 22 im Übersteuerungsmodus dargestellt. Das System folgt diesem Übergang, wenn der Fahrer, ausgehend vom Abblendzustand 21 manuell aufblenden möchte, die Steuerungsautomatik aus irgendwelchen Gründen jedoch mangelnde Betriebsbereitschaft meldet. In diesem Fall kann der Fahrer durch Betätigung des Lenkstockhebels zwischen den Zuständen 21 und 22 umschalten, wobei die Funktionsweise des Übersteuerungsmodus in diesem Fall derjenigen des herkömmlichen, manuellen Modus entspricht.

Natürlich hat der Fachmann eine Vielzahl von Möglichkeiten an Hand, das erfindungsgemäße Konzept umzusetzen. Zum Austausch der Informationen zwischen den zu verwendenden Sensoren, Steuereinheiten, Zustandsflaggen etc. eignet sich insbesondere der in modernen Kraftfahrzeugen übliche CAN-Bus zwischen den Steuergeräten. In welcher Weise die einzelnen Steuerleitungen bzw. Steuerbits belegt sind, ist dabei dem Fachmann in Ansehung der konkreten Systemanforderungen überlassen. Auch ist es für die grundlegende Erfindung unerheblich, ob und welche Zusatzfaktoren und -kriterien erfüllt sein müssen, um zu dem in Figur 1 illustrierten Verfahrensausschnitt zu gelangen.

## Patentansprüche

1. Verfahren zur Betätigung von Scheinwerfern eines Kraftfahrzeuges mit einem manuellen Modus, in dem die Scheinwerfer mittels manueller Betätigung eines Wahlhebels in eine erste Betätigungsrichtung in einen ersten Leuchtzustand und mittels Betätigung des Wahlhebels in eine zweite Betätigungsrichtung in einen zweiten Leuchtzustand überführbar sind, und einem automatischen Modus (10), in dem eine externe Beleuchtungssituation mittels Sensoren erfasst und durch Auswertemittel ausgewertet wird, so dass die Scheinwerfer gemäß einem Ergebnis der Auswertung automatisch in den ersten (12) oder in den zweiten (11) Leuchtzustand versetzt werden, wobei im automatischen Modus eine Übersteuerungsmöglichkeit vorgesehen ist, so dass die Scheinwerfer durchmanuelle Betätigung des Wahlhebels in die erste oder in die zweite Betätigungsrichtung unabhängig von dem Ergebnis der Auswertung in den jeweils entsprechenden Leuchtzustand überführbar sind
wobei ein spezieller Übersteuerungsmodus (20) vorgesehen ist, der durch manuelle Betätigung (122; 114) des Wahlhebels im automatischen Modus eingeschaltet wird,
wobei im Fall, dass sich die Scheinwerfer im ersten Leuchtzustand (22, 12) befinden, eine Betätigung (124; 223) des Wahlhebels in die erste Betätigungsrichtung eine Umschaltung zwischen dem automatischen Modus (10) und dem Übersteuerungsmodus (20) verursacht,
wobei die Scheinwerfer im Fall, dass sie sich im Übersteuerungsmodus (20) im ersten Leuchtzustand(22) befinden, durch eine Betätigung (222) des Wahlhebels in die zweite Betätigungsrichtung unter Beibehaltung des Übersteuerungsmodus (20)in den zweiten Leuchtzustand (21) überführbar sind, wobei
im Fall, dass sich die Scheinwerfer im Übersteuerungsmodus (20) im zweiten Leuchtzustand (21) befinden, Betätigung (211) des Wahlhebels in die erste Betätigungsrichtung eine Umschaltung in den automatischen Modus (10)verursacht, falls dieser betriebsbereit ist, wobei im Fall, dass der automatische Modus (10) nicht betriebsbereit ist, Betätigung (202)des Wahlhebels in die erste Betätigungsrichtung eine Überführung der Scheinwerferin den ersten Leuchtzustand (22) unter Beibehaltung des Übersteuerungsmodus(20) verursacht, und wobei erste Leuchtzustand (12; 22) der Scheinwerfer deren Fernlichteinstellung und der zweite Leuchtzustand (11; 21) der Scheinwerfer deren Abblendlichteinstellung entspricht.

2. Verfahren nach Anspruch 1, **dadurch gekennzeichnet, dass** mittels eines Schalters zwischen dem manuellen Modus einerseits und dem automatischen(10) und Übersteuerungsmodus (20) andererseits gewählt werden kann.

3. Verfahren nach einem der vorangehenden Ansprüche, **dadurch gekennzeichnet, dass** nach Ausschalten der Zündung des Kraftfahrzeugs selbsttätig der manuelle Modus eingestellt wird.

4. Verfahren nach einem der vorangehenden Ansprüche, **dadurch gekennzeichnet, dass** eine Kontrollleuchte vorgesehen ist, die den Fahrer des Kraftfahrzeugs darauf hinweist, dass der automatische Modus (10) eingeschaltet ist.

5. Verfahren nach einem der vorangehenden Ansprüche, **dadurch gekennzeichnet, dass** im Fall, dass sich die Scheinwerfer im zweiten Leuchtzustand (11, 21) befinden, Betätigung des Wahlhebels in der zweiten Betätigungsrichtung für die Dauer der Betätigung ein Aufblenden der Scheinwerfer verursacht.

## Claims

1. A method for actuating headlights of a motor vehicle with a manual mode, in which the headlights, by manually actuating a selector lever in a first actuating direction, can be transferred into a first illuminating state, and, by actuating the selector lever in a second actuating direction, can be transferred into a second illuminating state, and with an automatic mode (10), in which an external lighting situation is detected by means of sensors and is evaluated by evaluating means so that the headlights are automatically displaced into the first illuminating state (12) or into the second illuminating state (11) according to a result of the evaluation, wherein in the automatic mode an override possibility is provided so that, by manually actuating the selector lever in the first or in the second actuating direction, the headlights can be transferred into the corresponding illuminating state independently of the result of the evaluation,
wherein a special override mode (20) is provided, which is switched on by manually actuating (122; 114) the selector lever in the automatic mode, wherein, in the event that the headlights are in the first illuminating state (22, 12), an actuation (124; 223) of the selector lever in the first actuating direction causes a switchover between the automatic mode (10) and the override mode (20),
wherein, in the event that the headlights are in the override mode (20) in the first illuminating state (22), the headlights can be transferred into the second illuminating state (21) by actuating (222) the selector lever in the second actuating direction whilst maintaining the override mode (20), wherein
in the event that the headlights are in the second illuminating state (21) in the override mode (20), actuation (211) of the selector lever in the first actuating direction causes a switchover into the automatic mode (10), if this is ready for operation, wherein, in the event that the automatic mode (10) is not ready for operation, actuation (202) of the selector lever in the first actuating direction causes the headlights to be transferred into the first illuminating state (22) whilst maintaining the override mode (20), and wherein the first illuminating state (12; 22) of the headlights corresponds to the main beam setting of the headlights, and the second illuminating state (11; 21) of the headlights corresponds to the dipped beam setting of the headlights.

2. A method according to claim 1, **characterised in that**, by means of a switch, it is possible to choose between the manual mode on the one hand and the automatic (10) and override mode (20) on the other hand.

3. A method according to either one of the preceding claims, **characterised in that** the manual mode is automatically set once the ignition of the motor vehicle has been switched off.

4. A method according to any one of the preceding claims, **characterised in that** a warning lamp is provided, which informs the driver of the motor vehicle that the automatic mode (10) is switched on.

5. A method according to any one of the preceding claims, **characterised in that**, in the event that the headlights are in the second illuminating state (11, 21), actuation of the selector lever in the second actuating direction causes the headlights to be switched to main beam for the duration of the actuation.

## Revendications

1. Procédé d'actionnement des projecteurs d'un véhicule comprenant un mode manuel dans lequel les projecteurs peuvent être transférés dans un premier état d'éclairage par actionnement manuel d'un levier de sélection dans une première direction et dans un second état d'éclairage, par actionnement du levier de sélection dans une seconde direction, ainsi qu'un mode automatique (10) dans lequel la situation d'éclairage externe est détectée au moyen de capteurs et exploitée par des moyens d'exploitation de sorte que en fonction du résultat de cette exploitation, les projecteurs puissent être automatiquement déplacés dans le premier état d'éclairage (12) ou dans le second état d'éclairage (11), en mode automatique, une possibilité de surcommande étant prévue, de sorte que les projecteurs puissent être transférés par actionnement manuel du levier de sélection dans la première direction d'actionnement ou dans la seconde direction d'actionnement dans l'état d'éclairage correspondant respectif indépendamment du résultat de l'exploitation,
procédé selon lequel il est prévu un mode de surcommande spécifique (20) qui est enclenché par actionnement manuel (122, 114) du levier de sélection en mode automatique,
lorsque les projecteurs se trouvent dans le premier état d'éclairage (22, 12), un actionnement (124, 223) du levier de sélection dans la première direction provoque une commutation entre le mode automatique (10) et le mode de surcommande (20),
lorsque les projecteurs se trouvent en mode de surcommande (20), dans le premier état d'éclairage (22) ils peuvent être transférés dans le second état d'éclairage (21) par un actionnement (222) du levier de sélection dans la seconde direction en conservant le mode de surcommande (20), lorsque les projecteurs se trouvent dans le second état d'éclairage (21) en mode de surcommande (20), un actionnement (211) du levier de sélection dans la première direction provoque une commutation en mode automatique (10) lorsque celui-ci est opérationnel et, lorsque le mode automatique (10) n'est pas opérationnel, un actionnement (202) du levier de sélection dans la première direction provoque un transfert des projecteurs dans le premier état d'éclairage (22) en conservant le mode de surcommande (20), le premier état d'éclairage (12, 22) des projecteurs correspondant à leur réglage en feux de route portée, et le second état d'éclairage (11, 21) des projecteurs correspondant à leur réglage en feux de croisement.

2. Procédé conforme à la revendication 1,
**caractérisé en ce qu'**
un commutateur permet d'effectuer une sélection entre le mode manuel d'une part et le mode automatique (10) et le mode de surcommande (20) d'autre part.

3. Procédé conforme à l'une des revendications précédentes,
**caractérisé en ce qu'**
après coupure de l'allumage du véhicule, le mode manuel est automatiquement réglé.

4. Procédé conforme à l'une des revendications précédentes,
**caractérisé en ce qu'**
il est prévu une lampe de contrôle qui avertit le conducteur du véhicule que le mode automatique (10) est enclenché.

5. Procédé conforme à l'une des revendications précédentes,
**caractérisé en ce que**
lorsque les projecteurs se trouvent dans le second état d'éclairage (11, 21) un actionnement du levier de sélection dans la seconde direction provoque une mise en feux de route des projecteurs pendant la durée de l'actionnement.
